# EUROPEAN PATENT APPLICATION

(11) **EP 4 450 147 A1**
(43) Date of publication of application: **23.10.2024**
(21) Application number: 23206493.1
(22) Date of filing: 27.10.2023
(51) Int. Cl.: B01D 53/62

(54) **CARBON DIOXIDE-CONTAINING GAS PROCESSING SYSTEM AND CARBON DIOXIDE-CONTAINING GAS PROCESSING METHOD**

(30) Priority: 18.04.2023 JP 2023067995
(71) Applicant: JONQUIL CONSULTING Inc., Tokyo 151-0071 (JP)
(72) Inventor: OCHIAI, Shigeru, Shibuya-ku, 151-0071 (JP)
(74) Representative: Drywood, Rosalind Aerona

(57) **Abstract**

There is provided a system comprising a carbon dioxide processing unit configured to generate a metal carbonate by reacting a carbon dioxide-containing gas with an aqueous dispersion containing a metal hydroxide and acetonitrile, a separation unit configured to separate a dispersion obtained after the carbon dioxide-containing gas is processed to generate a precipitate and a residual liquid, a residual liquid supply unit configured to supply the residual liquid to the carbon dioxide processing unit, a heating unit configured to generate carbon dioxide by thermally decomposing the precipitate, and a graphene generating unit configured to generate graphene by heating the generated carbon dioxide, wherein a content of acetonitrile in an aqueous dispersion supplied together with the residual liquid to the carbon dioxide processing unit is decided based on an amount of acetonitrile in the residual liquid.

## Description

### BACKGROUND OF THE INVENTION

### Field of the Invention

The present invention relates to a carbon dioxide-containing gas processing system and a carbon dioxide-containing gas processing method.

### Description of the Related Art

Reduction of carbon dioxide regarded as one cause of global warming is a subject that is important worldwide. Large amounts of carbon dioxide are presumably emitted from thermal power plants using petroleum, coal, and the like as the energy sources. As a method of reducing the emission amount of carbon dioxide (a method of achieving low carbonization), Carbon dioxide Capture and Storage (CCS) and Carbon dioxide Capture, Utilization and Storage (CCUS) have been developed and promoted.

Also, a natural gas generates only a small amount of carbon dioxide per heat generation amount when combusted, and hence is regarded as a fuel that has only a small impact on the environment among other fossil energies. A natural gas is attracting attention as an alternative fuel of petroleum, amidst demands to solve environmental problems and diversify the energy resources. However, natural gas produced from a gas field or an oil field contains carbon dioxide in addition to methane as a main component in many cases. Therefore, before natural gas is used as the source material in a gas product, carbon dioxide is removed from the natural gas.

Known examples of a technique of capturing or removing carbon dioxide are a chemical absorption process, a physical absorption process, a membrane separation process, and an adsorption process, each of which uses an absorbing solution, and a representative capturing technique is a chemical absorption process using an aqueous amine solution.

Japanese Patent No. 6905693 discloses a method of processing carbon dioxide by supplying carbon dioxide to an aqueous dispersion containing magnesium hydroxide and acetonitrile. However, this carbon dioxide processing generates by-products, so there is demand for construction of a carbon dioxide processing system that takes into account of the environment including the handling of these by-products.

### SUMMARY OF THE INVENTION

One embodiment of the present invention provides a carbon dioxide-containing gas processing system capable of reducing wastes produced by carbon dioxide processing.

The present invention in its first aspect provides a carbon dioxide-containing gas processing system as specified in claims 1 to 4.

The present invention in its second aspect provides a carbon dioxide-containing gas processing method as specified in claims 5 to 8.

### BRIEF DESCRIPTION OF THE DRAWINGS

Fig. 1 is a schematic view of a carbon dioxide-containing gas processing system according to one embodiment;
Fig. 2 is a schematic view of a carbon dioxide-containing gas processing system according to another embodiment; and
Fig. 3 is a schematic view of a carbon dioxide-containing gas processing system according to still another embodiment.

### DESCRIPTION OF THE EMBODIMENTS

Hereinafter, embodiments will be described in detail with reference to the attached drawings. Note that the following embodiments are not intended to limit the scope of the claimed invention, and limitation is not made to an invention that requires all combinations of features described in the embodiments. Two or more of the multiple features described in the embodiments may be combined as appropriate. Furthermore, the same reference numerals are given to the same or similar configurations, and redundant description thereof is omitted.

### [Carbon Dioxide-Containing Processing System According to One Embodiment]

A carbon dioxide-containing gas processing system according to one embodiment includes a carbon dioxide processing unit for generating a metal carbonate by causing a carbon dioxide-containing gas and an aqueous dispersion containing a metal hydroxide and acetonitrile to react with each other, a separation unit for performing solid-liquid separation on a dispersion obtained after the carbon dioxide-containing gas is processed, thereby generating a precipitate containing the metal carbonate and a residual liquid containing acetonitrile, a residual liquid supply unit for supplying the residual liquid to the carbon dioxide processing unit, a heating unit for generating carbon dioxide and a metal oxide by thermally decomposing the precipitate, and a graphene generating unit for generating graphene by heating the generated carbon dioxide.

In addition, in this carbon dioxide-containing gas processing system according to one embodiment, a content of acetonitrile in an aqueous dispersion that contains a metal hydroxide and acetonitrile and is supplied together with the residual liquid to the carbon dioxide processing unit is decided based on an amount of acetonitrile in the residual liquid. As described above, the dispersion obtained after the carbon dioxide-containing gas is processed can be converted into a product as graphene, and acetonitrile used in the processing can be reused in an aqueous dispersion that contains a metal hydroxide and acetonitrile and is used to process a carbon dioxide-containing gas. Therefore, wastes can be reduced in the processing of a carbon dioxide-containing gas, and the reuse of acetonitrile can reduce the cost for the processing of a carbon dioxide-containing gas.

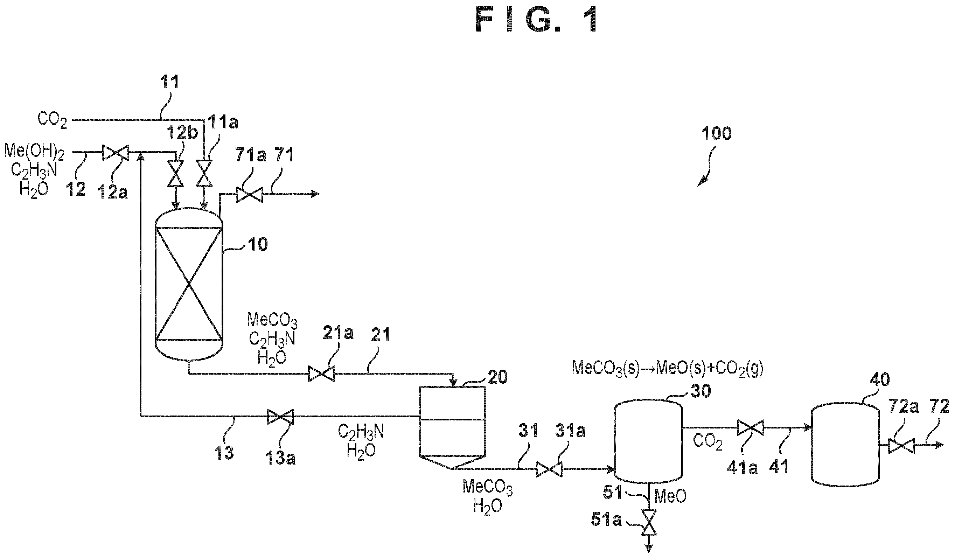

Fig. 1 is a schematic view of the carbon dioxide-containing gas processing system according to one embodiment. A carbon dioxide-containing gas processing system 100 according to this embodiment includes a carbon dioxide processing unit 10, a separation unit 20, a heating unit 30, and a graphene generating unit 40. Each unit will be explained below.

### <Carbon Dioxide Processing Unit>

The carbon dioxide processing unit 10 includes a processing vessel, and causes a carbon dioxide-containing gas to react with an aqueous dispersion containing a metal hydroxide and acetonitrile in the processing vessel, thereby removing carbon dioxide from the carbon dioxide-containing gas, and generating a metal carbonate. The processing vessel includes a carbon dioxide-containing gas supply port to which a carbon dioxide-containing gas is supplied, and an aqueous dispersion supply port to which an aqueous dispersion containing a metal hydroxide (Me(OH)₂) and acetonitrile (C₂H₃N) (to be also referred to as "an aqueous dispersion" hereinafter) is supplied. A carbon dioxide-containing gas supply line 11 is connected to the carbon dioxide-containing gas supply port, and the supply amount of a carbon dioxide-containing gas can be adjusted by using a valve 11a formed in the carbon dioxide-containing gas supply line 11. An aqueous dispersion supply line 12 is connected to the aqueous dispersion supply port, and the supply amount of an aqueous dispersion can be adjusted by using valves 12a and 12b formed in the aqueous dispersion supply line 12. Also, the contents of metal hydroxide and acetonitrile in the aqueous dispersion can be adjusted before the aqueous dispersion is supplied to the aqueous dispersion supply line 12.

The upper portion of the processing vessel includes an extraction port for extracting a processed gas obtained after the carbon dioxide-containing gas is processed. A processed gas discharge line 71 is connected to the processed gas extraction port, and the discharge amount of the processed gas can be adjusted by using a valve 71a formed in the processed gas discharge line 71. In addition, the bottom of the processing vessel includes a discharge port for discharging a dispersion obtained after the carbon dioxide-containing gas is processed, and a dispersion supply line 21 is connected to the dispersion extraction port.

The processing vessel is not particularly limited as long as the vessel has a pressure resistance capable of resisting the pressure, the temperature, and the like when a carbon dioxide-containing gas is processed, and a corrosion resistance capable of holding an aqueous dispersion and the like. In one embodiment, the material of the processing vessel can be a metal, and examples of the metal are stainless steel, aluminum, Monel, Hastelloy, and nickel. The shape of the processing vessel can be an airtight cylindrical or cuboidal shape.

In one embodiment, the processing vessel can have a liner on the inner surface that comes in contact with an aqueous dispersion to be contained in the vessel. The liner can also be formed on an inner surface that is not always in contact with an aqueous dispersion to be contained in the processing vessel, or on the entire inner surface of the processing vessel. The liner is a fluorine resin layer, and the fluorine resin layer is formed by, for example, a perfluoroalkoxyalkane resin (PFA) or a polytetrafluoroethylene resin (PTFE).

The processing vessel includes a carbon dioxide-containing gas supply unit that is connected to the carbon dioxide-containing gas supply line 11 and supplies a carbon dioxide-containing gas to the processing vessel. In one embodiment, the carbon dioxide-containing gas supply unit can bring a carbon dioxide-containing gas into contact with an aqueous dispersion by diffusing the gas as foam. For example, the carbon dioxide-containing gas supply unit can be configured by a supply pipe, a valve, and an ejection portion. Furthermore, the supply amount or the supply rate of a carbon dioxide-containing gas can be adjusted by a worker, and can also be adjusted automatically by connecting a control device to the carbon dioxide-containing gas supply unit and a carbon dioxide-containing gas source.

The processing vessel further includes an aqueous dispersion supply unit that is connected to the aqueous dispersion supply line 12 and supplies an aqueous dispersion to the processing vessel. This aqueous dispersion supply unit is not particularly limited as long as the unit can supply an aqueous dispersion to the processing vessel, and can be configured by a supply pipe and a valve. The supply amount or the supply rate of an aqueous dispersion can be adjusted by a worker, and can also be adjusted automatically by connecting a control device to the aqueous dispersion supply unit, an aqueous dispersion source, and an aqueous dispersion supply pump.

The processing vessel can also include a gas collecting unit. The gas collecting unit is installed in the processing vessel and collects a processed gas in the processing vessel. The gas collecting unit is not particularly limited as long as the unit can collect a processed gas from the processing vessel, and can be configured by an extraction pipe and a valve. The concentration of carbon dioxide in a processed gas collected from the processing vessel can be detected by a gas detecting unit (not shown). The gas detecting unit can also be connected to the gas collecting unit. The gas detecting unit is not particularly limited as long as the unit can detect carbon dioxide, and examples are a gas chromatograph (GC), an infrared spectrophotometer (IR), and a mass spectrometer (MS). Note that the gas collecting unit can also be used as a unit for releasing a gas in order to adjust the internal pressure of the processing vessel. Note also that the processing vessel can include a heating unit, a pressure gauge, and the like as needed.

### <Separation Unit>

The separation unit 20 is so configured as to accept a dispersion obtained after a carbon dioxide-containing gas is processed in the carbon dioxide processing unit 10. The separation unit 20 includes a processing vessel, and the processing vessel has a dispersion supply port to which the dispersion obtained after the carbon dioxide-containing gas is processed is supplied. The dispersion supply line 21 is connected to the dispersion supply port, and the supply amount of the dispersion can be adjusted by a valve 21a formed in the dispersion supply line 21. The accepted dispersion contains a metal carbonate (MeCO₃), acetonitrile, and water, and the separation unit 20 performs solid-liquid separation on the dispersion, thereby generating a precipitate containing the metal carbonate and a residual liquid containing acetonitrile.

In one embodiment, the separation unit 20 can include a tank for temporarily storing the dispersion, before the dispersion supply port. In this case, even when the carbon dioxide processing unit 10 continuously processes a carbon dioxide-containing gas without waiting until the solid-liquid separation on the dispersion is completed in the separation unit 20 or without waiting until the processing vessel becomes empty, the produced dispersion can be stored in the tank.

The bottom of the processing vessel has an extraction port for extracting the precipitate containing the metal carbonate, and a precipitate supply line 31 is connected to this precipitate extraction port. In addition, the processing vessel has an extraction port for extracting the residual liquid containing acetonitrile in a substantially central portion in the direction of height, and a residual liquid supply line 13 is connected to this residual liquid extraction port.

This processing vessel is not particularly limited as long as the vessel has a corrosion resistance and the like, like the processing vessel of the carbon dioxide processing unit 10. In one embodiment, the material of the processing vessel can be a metal, and examples are stainless steel, aluminum, Monel, Hastelloy, and nickel.

The shape of the processing vessel can be a cylindrical shape or a cuboidal shape, and the bottom of the processing vessel can have the shape of a square pyramid that projects downward, in order to facilitate extraction of the precipitate containing the metal carbonate. In one embodiment, the upper portion of the processing vessel can also be opened so that the interior of the processing vessel can visually be confirmed.

The processing vessel can further include an agitator for agitating the dispersion obtained after the carbon dioxide-containing gas is processed, and a detector for detecting the concentration of acetonitrile in the residual liquid. An example of the detection method is a gas chromatography/mass spectrometry process.

### <Residual Liquid Supply Unit>

The residual liquid supply unit for supplying the residual liquid to the carbon dioxide processing unit 10 is installed between the separation unit 20 and the aqueous dispersion supply line 12. This residual liquid supply unit supplies a desired amount of the residual liquid to the carbon dioxide processing unit 10. The residual liquid processing unit is not particularly limited and can be configured by, for example, the residual liquid supply line 13, a valve 13a, and a pump (not shown).

The supply amount or the supply rate of the residual liquid can be adjusted by a worker, in accordance with, for example, the concentration or amount of acetonitrile in the residual liquid or the concentration of acetonitrile in the aqueous dispersion containing a metal hydroxide and acetonitrile. It is also possible to connect a control device to the residual liquid supply unit, and automatically adjust, for example, the valves 12a, 12b, and 13a. In one embodiment, the supply amount or the supply rate of the residual liquid is kept constant, and the worker or the control device decides the content of acetonitrile in the aqueous dispersion containing metal hydroxide and acetonitrile, which is supplied together with the residual liquid, based on the amount of acetonitrile in the residual liquid. It is possible to adjust the content of acetonitrile in the aqueous dispersion based on this decision, and supply the residual liquid and the aqueous dispersion to the carbon dioxide processing unit 10.

The amount of acetonitrile in the residual liquid can be obtained by detecting the concentration of acetonitrile in the residual liquid by forming a residual liquid collecting port in the residual liquid supply line 13. It is also possible to obtain the amount of acetonitrile in the residual liquid by using a detector that is installed in the separation unit 20 and detects the concentration of acetonitrile in the residual liquid.

The control device includes a processing unit, a storage unit such as a RAM or a ROM, and an interface unit for relaying signal exchange between an external device and the control device. The processing unit is a processor such as a CPU, and controls the configuration of the carbon dioxide-containing gas processing system 100 by executing a program stored in the storage unit. The storage unit stores various kinds of data in addition to the program to be executed by the processing unit. The interface unit can be provided with the detection result of the detector, and the processing unit can control, for example, the unit for supplying the aqueous dispersion containing a metal hydroxide and acetonitrile based on the provided detection result.

### <Heating Unit>

The heating unit 30 is configured to accept the precipitate separated by the separation unit 20 and containing the metal carbonate. The heating unit 30 includes a heating furnace and thermally decomposes the metal carbonate in the accepted precipitate in the heating furnace. The heating furnace has a precipitate supply port to which the precipitate containing the metal carbonate is supplied. The precipitate supply line 31 is connected to the precipitate supply port, and the supply amount of the precipitate can be adjusted by a valve 31a formed in the precipitate supply line 31. A dispersion containing the metal carbonate-containing precipitate and a small amount of water is transported through the precipitate supply line 31 from the separation unit 20 to the heating unit 30. The solid component concentration of the metal carbonate in the dispersion is not particularly limited as long as the dispersion can be transported through the precipitate supply line 31.

In one embodiment, the heating unit 30 can include a filter before the precipitate supply port, in order to dehydrate the precipitate containing the metal carbonate. In another embodiment, the heating unit 30 can include a dryer or a spray dryer before the precipitate supply port, in order to dehydrate and dry the precipitate containing the metal carbonate. This improves the thermal efficiency when the heating unit 30 thermally decomposes the metal carbonate.

The upper portion of the heating furnace has an extraction port for extracting a gas containing carbon dioxide, and a carbon dioxide supply line 41 is connected to the carbon dioxide extraction port. Furthermore, the bottom of the heating furnace has an extraction port for extracting a metal oxide (MeO).

Like the processing vessel of the carbon dioxide processing unit 10, the heating furnace is not particularly limited as long as it has a pressure resistance and a corrosion resistance. In one embodiment, the material of the heating furnace can be a metal, and an example is stainless steel.

The heating furnace performs a decarbonization reaction on the metal carbonate in the precipitate, and the produced carbon dioxide is used in graphene generation as will be described later. In one embodiment, by setting a vacuum atmosphere as the precipitate heating atmosphere, the heating temperature can be decreased, and graphene is efficiently generated because a gas generated by thermal decomposition of the precipitate contains carbon dioxide as a main component. Therefore, the heating furnace can include a vacuum pump in addition to the heater.

### <Graphene Generating Unit>

The graphene generating unit 40 is configured to accept carbon dioxide generated in the heating unit 30. The graphene generating unit 40 includes a heating furnace and generates graphene from carbon dioxide in the heating furnace. The heating furnace has a carbon dioxide supply port to which carbon dioxide is supplied. The carbon dioxide supply line 41 is connected to the carbon dioxide supply port, and the supply amount of carbon dioxide can be adjusted by a valve 41a formed in the carbon dioxide supply line 41. The heating furnace also has an extraction port for extracting graphene, and a graphene discharge line 72 is connected to the graphene extraction port.

On the other hand, when a carbon dioxide gas is heated to a predetermined temperature (for example, 600°C) in the presence of a metal (for example, magnesium or copper), graphene and a metal oxide are formed (see, for example, Japanese Patent Laid-Open No. 2014-527950). Therefore, the heating furnace incorporates a unit for arranging a metal.

The heating furnace is not particularly limited as long as it includes a heater and has a pressure resistance and a corrosion resistance like the processing vessel of the carbon dioxide processing unit 10. In one embodiment, the material of the heating furnace is a metal, and an example is stainless steel.

As described above, the carbon dioxide-containing gas processing system according to one embodiment includes the graphene generating unit and the residual liquid supply unit. This can reduce wastes, and can also reduce the cost for processing of the carbon dioxide-containing gas.

### [Carbon Dioxide-Containing Gas Processing System According to Another Embodiment]

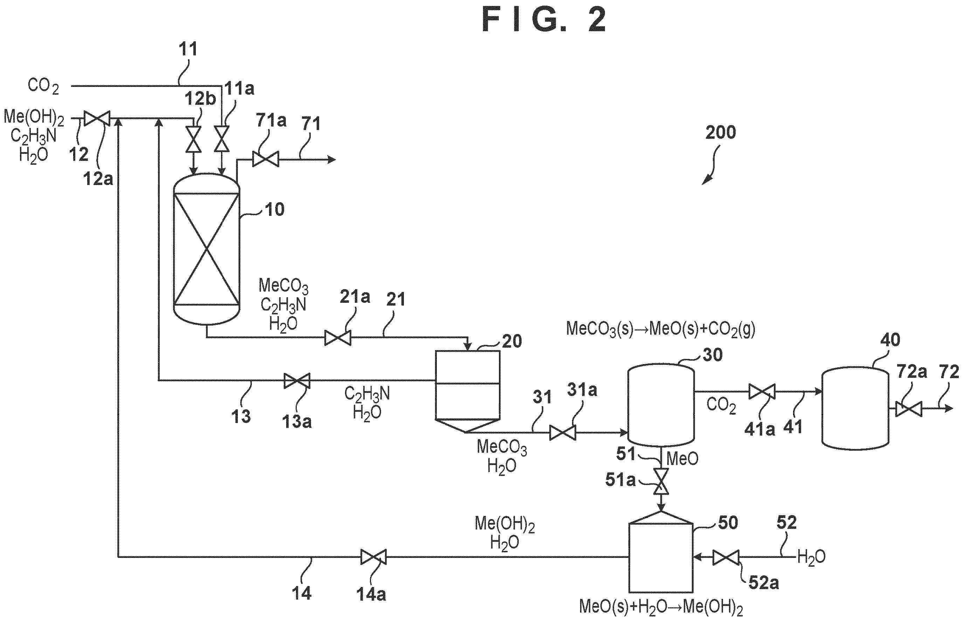

Fig. 2 is a schematic view of a carbon dioxide-containing gas processing system according to another embodiment. A carbon dioxide-containing gas processing system 200 according to another embodiment has a configuration in which a metal hydroxide generating unit 50 is connected to the heating unit 30 of the carbon dioxide-containing gas processing system 100 shown in Fig. 1. Differences from the carbon dioxide-containing gas processing system 100 according to one embodiment will mainly be explained below. The same reference numerals denote the same parts, and an explanation of common parts will be omitted.

### <Metal Hydroxide Generating Unit>

The metal hydroxide generating unit 50 is configured to accept a metal oxide generated in the heating unit 30. The metal hydroxide generating unit 50 includes a processing vessel, and forms a dispersion containing a metal hydroxide and water in the processing vessel. The processing vessel has a metal oxide supply port to which a metal oxide is supplied, and a water supply port to which water is supplied. A metal oxide supply line 51 is connected to the metal oxide supply port, and the supply amount of the metal oxide can be adjusted by a valve 51a formed in the metal oxide supply line 51. A water supply line 52 is connected to the water supply port, and the supply amount of water can be adjusted by a valve 52a formed in the water supply line 52. The processing vessel also has an extraction port for extracting a dispersion (to be also referred to as "a metal hydroxide dispersion" hereinafter) containing a metal hydroxide (Me(OH)₂) and water, and a metal hydroxide dispersion supply line 14 is connected to the metal hydroxide dispersion extraction port.

Like the processing vessel of the carbon dioxide processing unit 10, the processing vessel is not particularly limited as long as it has a corrosion resistance and the like. In one embodiment, the material of the processing vessel can be a metal, and examples are stainless steel, aluminum, Monel, Hastelloy, and nickel.

The shape of the processing vessel can be a cylindrical or cuboidal shape. In one embodiment, the upper portion of the processing vessel can also be opened so that the interior of the processing vessel can visually be confirmed. In addition, the processing vessel can further include an agitator in order to mix a metal oxide and water.

### <Metal Hydroxide Supply Unit>

A metal hydroxide supply unit for supplying a metal hydroxide dispersion to the carbon dioxide processing unit 10 is installed between the metal hydroxide generating unit 50 and the aqueous dispersion supply line 12. The metal hydroxide supply unit is not particularly limited as long as the unit can supply a desired amount of the metal hydroxide dispersion to the carbon dioxide processing unit 10, and can be configured by, for example, a metal hydroxide dispersion supply line 14, a valve 14a, and a pump (not shown).

The supply amount or the supply rate of the metal hydroxide dispersion can be adjusted by a worker, in accordance with, for example, the concentration or amount of the metal hydroxide in the metal hydroxide dispersion, and the concentration of the metal hydroxide in the aqueous dispersion containing the metal hydroxide and acetonitrile. It is also possible to connect a control device to the metal hydroxide dispersion supply unit, and automatically adjust, for example, valves 12a, 12b, and 14a. The amount of the metal hydroxide in the metal hydroxide dispersion can be obtained from the amounts of a metal oxide and water to be supplied to the processing vessel.

### <Residual Liquid Supply Unit and Metal Hydroxide Supply Unit>

In one embodiment, based on the amount of the metal hydroxide in the metal hydroxide dispersion and the amount of acetonitrile in the residual liquid, a worker or a control device decides the contents of the metal hydroxide and acetonitrile in the aqueous dispersion that contains the metal hydroxide and acetonitrile and is supplied together with the metal hydroxide dispersion and the residual liquid to the carbon dioxide processing unit 10. Based on this decision, it is possible to adjust the content of acetonitrile in the aqueous dispersion and supply the residual liquid and the aqueous dispersion to the carbon dioxide processing unit 10.

For example, while the supply amount or the supply rate of the metal hydroxide dispersion is kept constant and the supply amount or the supply rate of the residual liquid is kept constant, a worker or a control device decides the contents of the metal hydroxide and acetonitrile in the aqueous dispersion that contains the metal hydroxide and acetonitrile and is supplied together with the metal hydroxide dispersion and the residual liquid, based on the amount of the metal hydroxide in the metal hydroxide dispersion and the amount of acetonitrile in the residual liquid. Based on this decision, it is possible to adjust the contents of the metal hydroxide and acetonitrile in the aqueous dispersion, and supply the metal hydroxide dispersion, the residual liquid, and the aqueous dispersion to the carbon dioxide processing unit 10.

As described above, the carbon dioxide-containing gas processing system according to another embodiment includes the metal hydroxide supply unit. This can reduce wastes, and can also reduce the cost for processing of a carbon dioxide-containing gas.

### [Carbon Dioxide-Containing Gas Processing System According to Still Another Embodiment]

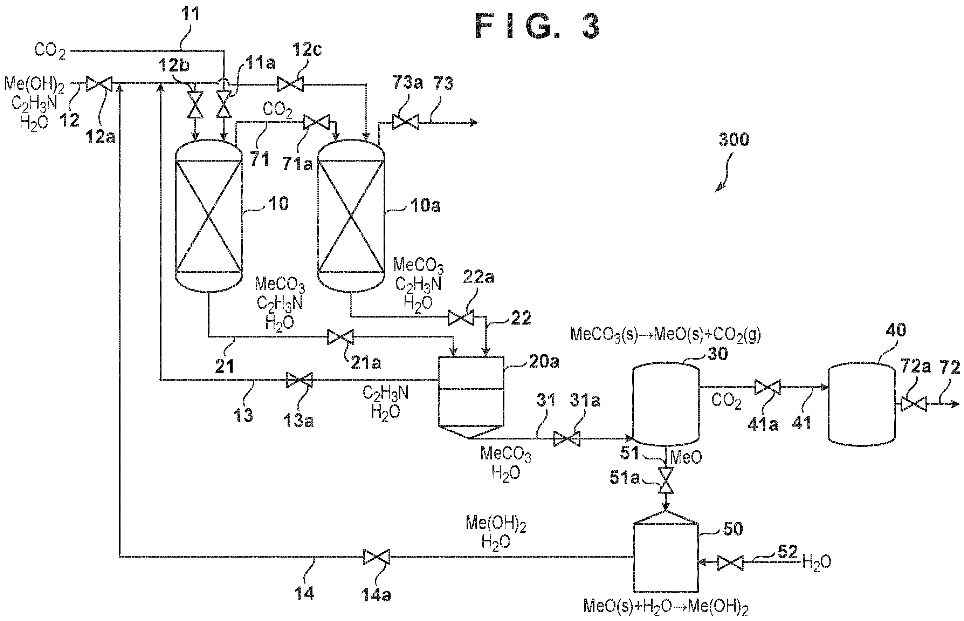

Fig. 3 is a schematic view of a carbon dioxide-containing gas processing system according to still another embodiment. A carbon dioxide-containing gas processing system 300 according to still another embodiment has a configuration in which a carbon dioxide processing unit 10a is connected to the carbon dioxide processing unit 10 in the carbon dioxide-containing gas processing system 200 according to another embodiment shown in Fig. 2. Differences from the carbon dioxide-containing gas processing system 200 according to another embodiment will mainly be explained below. The same reference numerals denote the same parts, and an explanation of common parts will be omitted.

### <Another Carbon Dioxide Processing Unit>

The carbon dioxide processing unit 10a is configured to accept a gas processed in the carbon dioxide processing unit 10. The carbon dioxide processing unit 10a includes a processing vessel, and causes the processed gas and an aqueous dispersion containing a metal hydroxide and acetonitrile to react with each other in the processing vessel, thereby removing carbon dioxide from the processed gas and generating a metal carbonate. The processing vessel has a processed gas supply port to which the processed gas is supplied, and an aqueous dispersion supply port to which an aqueous dispersion containing a metal hydroxide (Me) and acetonitrile (C₂H₃N) (to be also referred to as "an aqueous dispersion" hereinafter) is supplied. A processed gas supply line 71 is connected to the processed gas supply port, and the supply amount of the processed gas can be adjusted by a valve 71a formed in the processed gas supply line 71. An aqueous dispersion supply line 12 is connected to the aqueous dispersion supply port, and the supply amount of the aqueous dispersion can be adjusted by valves 12a and 12c formed in the aqueous dispersion supply line 12.

The upper portion of the processing vessel has an extraction port for extracting a gas obtained after the processed gas is further processed. A gas discharge line 73 is connected to the gas extraction port, and the extraction amount of the gas can be adjusted by a valve 73a formed in the gas discharge line 73. Furthermore, the bottom of the processing vessel has an extraction port for extracting the dispersion obtained after the processed gas is processed, and a dispersion supply line 22 is connected to the dispersion extraction port.

The processing vessel can have, for example, a pressure resistance and a corrosion resistance like the processing vessel of the carbon dioxide processing unit 10, and the material and shape of the processing vessel can also be the same as those of the processing vessel of the carbon dioxide processing unit 10. In addition, the processing vessel can have a liner on the inner surfaces like the processing vessel of the carbon dioxide processing unit 10.

The processing vessel also has a processed gas supply unit that is connected to the processed gas supply line 71 and supplies the processed gas to the processing vessel. Like the carbon dioxide-containing gas supply unit of the carbon dioxide processing unit 10, the processed gas supply unit can be configured by a supply pipe, a valve, and an ejection portion. The supply amount or the supply rate of the processed gas can be adjusted by a worker, and can also be adjusted automatically by connecting a control device to the processed gas supply unit.

The processing vessel has an aqueous dispersion supply unit that is connected to an aqueous dispersion supply line 12 and supplies an aqueous dispersion to the processing vessel. The aqueous dispersion supply unit can be configured by a supply pipe and a valve, like the carbon dioxide processing unit 10. The supply amount or the supply rate of the aqueous dispersion can be adjusted by a worker, and can also be adjusted automatically by connecting a control device to the aqueous dispersion supply unit, an aqueous dispersion source, and an aqueous dispersion supply pump. The processing vessel can also include a heating unit, a gas collecting unit, a pressure gauge, and the like.

### <Separation Unit>

A separation unit 20a is configured to accept a dispersion obtained after a carbon dioxide-containing gas is processed in the carbon dioxide processing unit 10, and to accept a dispersion obtained after the processed gas is further processed in the carbon dioxide processing unit 10a. The separation unit 20a includes a processing vessel, and the processing vessel has a dispersion supply port to which the dispersion obtained after the carbon dioxide-containing gas is processed is supplied, and a dispersion supply port to which the dispersion obtained after the processed gas is further processed is supplied. A dispersion supply line 21 is connected to the supply port for supplying the dispersion obtained after the carbon dioxide-containing gas is processed, and the supply amount of the dispersion can be adjusted by a valve 21a formed in the dispersion supply line 21. A dispersion supply line 22 is connected to the supply port for supplying the dispersion obtained after the processed gas is further processed, and the supply amount of the dispersion can be adjusted by a valve 22a formed in the dispersion supply line 22. Another configuration of the separation unit 20a is the same as that of the separation unit 20 described previously. Also, the accepted dispersion contains a metal carbonate (MeCO₃), acetonitrile, and water, and the separation unit 20a performs solid-liquid separation on the dispersion, thereby generating a precipitate containing the metal carbonate and a residual liquid containing acetonitrile.

### <Residual Liquid Supply Unit and Metal Hydroxide Supply Unit>

The configurations of a residual liquid supply unit and a metal hydroxide supply unit are the same as those of the above-described residual liquid supply unit and metal hydroxide supply unit, except that a metal hydroxide dispersion and a residual liquid are supplied to the carbon dioxide processing unit 10a in addition to the carbon dioxide processing unit 10.

The supply amount or the supply rate of the residual solution to be supplied to the carbon dioxide processing unit 10 and the carbon dioxide processing unit 10a can be adjusted by a worker in accordance with, for example, the concentration or amount of acetonitrile in the residual liquid, and the concentration of acetonitrile in the aqueous dispersion containing the metal hydroxide and acetonitrile. It is also possible to connect a control device to the residual liquid supply unit, and automatically adjust, for example, valves 12a, 12b, 12c, and 13a.

The supply amount or the supply rate of the metal hydroxide dispersion to be supplied to the carbon dioxide processing unit 10 and the carbon dioxide processing unit 10a can be adjusted by a worker in accordance with, for example, the concentration or amount of the metal hydroxide in the metal hydroxide dispersion, and the concentration of the metal hydroxide in the aqueous dispersion containing the metal hydroxide and acetonitrile. It is also possible to connect a control device to the metal hydroxide dispersion supply unit, and automatically adjust, for example, the valves 12a and 12b and a valve 14a.

In one embodiment, based on the amount of the metal hydroxide in the metal hydroxide dispersion and the amount of acetonitrile in the residual liquid, a worker or a control device can decide the contents of the metal hydroxide and acetonitrile in the aqueous dispersion that contains the metal hydroxide and acetonitrile and is supplied together with the metal hydroxide dispersion and the residual liquid to the carbon dioxide processing unit 10 and the carbon dioxide processing unit 10a. It is possible to adjust the contents of the metal hydroxide and acetonitrile in the aqueous dispersion based on this decision, and supply the residual liquid and the aqueous dispersion to the carbon dioxide processing unit 10 and the carbon dioxide processing unit 10a.

For example, the supply amount or the supply rate of the metal hydroxide dispersion is kept constant, and the supply amount or the supply rate of the residual liquid is kept constant. Then, based on the amount of the metal hydroxide in the metal hydroxide dispersion and the amount of acetonitrile in the residual liquid, a worker or a control device decides the contents of the metal hydroxide and acetonitrile in the aqueous dispersion that contains the metal hydroxide and acetonitrile and is supplied together with the metal hydroxide dispersion and the residual liquid. It is possible to adjust the contents of metal hydroxide and acetonitrile in the aqueous dispersion based on this decision, and supply the metal hydroxide dispersion, the residual liquid, and the aqueous dispersion to the carbon dioxide processing unit 10 and the carbon dioxide processing unit 10a.

As described above, still another carbon dioxide-containing gas processing system includes the carbon dioxide processing unit 10a in addition to the carbon dioxide processing unit 10. This improves the removal ratio of carbon dioxide in the carbon dioxide-containing gas. In addition, still another carbon dioxide-containing gas processing system includes the two carbon dioxide processing units, but can also be so configured as to include still another carbon dioxide processing unit.

### [Carbon Dioxide-Containing Gas Processing Method According to One Embodiment]

A carbon dioxide-containing gas processing method according to one embodiment uses the above-described carbon dioxide-containing gas processing system according to one embodiment. The carbon dioxide-containing gas processing method according to one embodiment includes a step of generating a metal carbonate by causing a carbon dioxide-containing gas and an aqueous dispersion containing a metal hydroxide and acetonitrile to react with each other, a step of performing solid-liquid separation on a dispersion obtained after the carbon dioxide-containing gas is processed, thereby generating a precipitate containing the metal carbonate and a residual liquid containing acetonitrile, a step of generating carbon dioxide and a metal oxide by thermally decomposing the precipitate, and a step of generating graphene by heating the generated carbon dioxide. The method further includes a step in which when mixing the residual liquid with an aqueous dispersion that contains a metal hydroxide and acetonitrile and is different from the abovementioned aqueous dispersion in order to cause the residual liquid to react with a carbon dioxide-containing gas different from the carbon dioxide-containing gas used, a content of acetonitrile in the different aqueous dispersion that contains a metal hydroxide and acetonitrile and is mixed with the residual liquid is decided based on an amount of acetonitrile in the residual liquid.

### <Carbon Dioxide-Containing Gas Processing Step of Generating Metal Carbonate>

### (Aqueous Dispersion Containing Metal Hydroxide and Acetonitrile)

An aqueous dispersion containing a metal hydroxide and acetonitrile is supplied to the processing vessel of the carbon dioxide processing unit 10 via the aqueous dispersion supply unit. The supply amount of the aqueous dispersion can be adjusted by measuring the concentration of carbon dioxide in the carbon dioxide-containing gas by using a gas detecting unit or the like, in accordance with the amount of the carbon dioxide-containing gas to be processed and the measured carbon dioxide concentration. Also, the contents of the metal hydroxide and acetonitrile in the aqueous dispersion can be adjusted before the aqueous dispersion is supplied to the aqueous dispersion supply line 12.

The concentration of the metal hydroxide in the aqueous dispersion containing water, the metal hydroxide, and acetonitrile is not particularly limited. The concentration of the metal hydroxide can be 1 wt% or more in one embodiment, 5 wt% or more in another embodiment, 10 wt% or more in still another embodiment, 20 wt% or more in still another embodiment, and 30 wt% or more in still another embodiment, as the solid component content. This improves the absorption efficiency of carbon dioxide in the aqueous dispersion. Also, the concentration of the metal hydroxide can be 80 wt% or less in one embodiment, 70 wt% or less in another embodiment, 60 wt% or less in still another embodiment, 50 wt% or less in still another embodiment, and 40 wt% or less in still another embodiment, as the solid component content. This gives the aqueous dispersion an appropriate viscosity, and uniformizes the reaction between the metal hydroxide and carbon dioxide.

The concentration of acetonitrile in the aqueous dispersion containing water, the metal hydroxide, and acetonitrile is not particularly limited. The concentration of acetonitrile can be 1 wt% or more in one embodiment, 5 wt% or more in another embodiment, 10 wt% or more in still another embodiment, and 20 wt% or more in still another embodiment. Also, the concentration of acetonitrile can be 60 wt% or less in one embodiment, 50 wt% or less in another embodiment, 40 wt% or less in still another embodiment, and 30 wt% or less in still another embodiment. This facilitates adjustment of the absorption rate of carbon dioxide in the aqueous dispersion.

### Metal Hydroxide

Examples of the metal hydroxide are calcium hydroxide and magnesium hydroxide. In addition to these metal hydroxides, it is possible to add barium hydroxide, zinc hydroxide, and sodium hydroxide. As disclosed in Japanese Patent No. 6905693, Japanese Patent No. 6905694, and Japanese Patent No. 7054431, the processing rate of carbon dioxide in a carbon dioxide-containing gas can be adjusted by the supply amount of the metal hydroxide.

In one embodiment, calcium hydroxide can be used as the metal hydroxide from the viewpoint of the reactivity to carbon dioxide. The purity of calcium hydroxide can be 80 wt% or more in one embodiment, 90 wt% or more in another embodiment, and 95 wt% or more in still another embodiment. This improves the absorption efficiency of carbon dioxide in the aqueous dispersion.

In one embodiment, calcium hydroxide can be a powder. The average particle diameter (D50) of calcium hydroxide is 1,000 µm or less in one embodiment, 500 µm or less in another embodiment, 100 µm or less in still another embodiment, 50 µm or less in still another embodiment, and 1 µm or less in still another embodiment. Also, the average particle diameter (D50) of calcium hydroxide is 0.01 µm or more in one embodiment, 0.1 µm or more in another embodiment, 0.5 µm or more in still another embodiment, 0.7 µm or more in still another embodiment, and 0.9 µm or more in still another embodiment. When calcium hydroxide has the average particle diameter like this, the reaction between calcium hydroxide and carbon dioxide improves. The average particle diameter (D50) is a value obtained by a volume-based particle size distribution based on the laser diffraction scattering method, and the D50 value means the particle diameter (a median diameter) at a cumulative frequency of 50%.

### Acetonitrile

Acetonitrile contained in the aqueous dispersion is not particularly limited. The purity of acetonitrile can be 90 wt% or more in one embodiment, 95 wt% or more in another embodiment, 98 wt% in still another embodiment, and 99 wt% or more in still another embodiment. This improves adjustment of the absorption rate of carbon dioxide in the aqueous dispersion.

### Water Contained in Aqueous Dispersion

Water contained in the aqueous dispersion functions as a solvent and is not particularly limited. The origin of water is not particularly limited, and it is possible to use, for example, tap water, groundwater, distilled water, and ion-exchanged water.

### Additives

In one embodiment, the aqueous dispersion containing the metal hydroxide and acetonitrile can contain various additives, for example, a dispersant. The material of the dispersant is not particularly limited, and examples are a dispersant of an inorganic compound and a polymeric surfactant. The dispersant improves the dispersibility of the metal hydroxide even when the solid component concentration of the metal hydroxide is high, thereby uniformizing the reaction between the metal hydroxide and carbon dioxide.

### (Carbon Dioxide-Containing Gas)

A carbon dioxide-containing gas is supplied to the processing vessel of the carbon dioxide processing unit 10 via a carbon dioxide-containing gas supply unit. The supply amount and the supply rate of the carbon dioxide-containing gas can be adjusted by a valve of the carbon dioxide-containing gas supply unit.

The carbon dioxide-containing gas is not limited to pure carbon dioxide and need only be a gas containing carbon dioxide. In one embodiment, gases emitted from natural gas fields and natural gas purification equipment contain high-concentration carbon dioxide, so an example of the carbon dioxide-containing gas is a gas deriving from a natural gas. Other examples of the carbon dioxide-containing gas are gases emitted from various kinds of facilities and equipment such as a thermal power plant, a boiler of a factory, a kiln of a cement plant, a blast furnace and a converter of a steel plant, and an incinerator. These gases contain carbon dioxide generated by burning gaseous fuels such as a liquefied natural gas (LNG) and a liquefied petroleum gas (LP), liquid fuels such as heavy oil, gasoline, and a diesel fuel, and solid fuels such as coal.

The concentration of carbon dioxide in the carbon dioxide-containing gas is not particularly limited. The concentration of carbon dioxide can be 1 vol% or more in one embodiment, 2 vol% or more in another embodiment, 10 vol% or more in still another embodiment, 20 vol% or more in still another embodiment, and 40 vol% or more in still another embodiment. Also, the concentration of carbon dioxide can be 70 vol% or less in one embodiment, 65 vol% or less in another embodiment, 60 vol% or less in still another embodiment, 55 vol% or less in still another embodiment, and 50 vol% or less in still another embodiment. Consequently, carbon dioxide can be absorbed in the aqueous dispersion with a sufficient absorption rate and a sufficient absorption amount. Note that the gas can also contain, for example, water vapor, NOₓ, SOₓ, CO, H₂S, COS, H₂, and O₂, in addition to carbon dioxide.

### (Contact and Reaction between Carbon Dioxide-Containing Gas and Aqueous Dispersion)

The carbon dioxide-containing gas supplied to the processing vessel of the carbon dioxide processing unit 10 is ejected into the aqueous dispersion from the ejection portion, diffused as foam, and brought into contact with the aqueous dispersion. The ejected carbon dioxide-containing gas (or foam) agitates the aqueous dispersion.

The foam of the carbon dioxide-containing gas in contact with the aqueous dispersion reacts with the meatal hydroxide in the aqueous dispersion and generates a metal carbonate. The temperature of the aqueous dispersion at that time is not particularly limited, so the reaction can be performed at room temperature (for example, 25°C ± 15°C). This can improve the absorption rate and the absorption amount of carbon dioxide. Also, the internal pressure of the processing vessel can be measured by a pressure gauge. The internal pressure of the processing vessel is not particularly limited, and can be set at a pressure equal to or higher than the atmospheric pressure. This can improve the absorption rate and the absorption amount of the carbon dioxide-containing gas with respect to the aqueous dispersion. The internal pressure of the processing vessel can also be set at a pressure lower than the atmospheric pressure.

The end of the reaction between the carbon dioxide-containing gas and the aqueous dispersion can be a point of time at which a time predetermined by a preliminary experiment or the like elapsed, and can also be a point of time at which a predetermined carbon dioxide concentration is obtained by collecting the processed gas in the processing vessel by a gas collecting unit and measuring the concentration of carbon dioxide by the gas collecting unit.

### Capture of Processed Gas

After the reaction between the carbon dioxide-containing gas and the aqueous dispersion ended, the processed gas existing in the processing vessel can be captured from the processing vessel via the processed gas discharge line 71 installed in the upper portion of the processing vessel. When the carbon dioxide-containing gas is a gas emitted from a natural gas purification equipment (that is, a gas deriving from a natural gas), the captured gas is used as a product gas as a material of a liquefied natural gas or the like. When the carbon dioxide-containing gas is a gas emitted from various facilities and equipment, the captured gas undergoes removal of other components or another processing, and is emitted after that as needed.

### <Step of Performing Solid-Liquid Separation on Dispersion>

The dispersion obtained after the carbon dioxide-containing gas is processed is supplied to the processing vessel of the separation unit 20. The dispersion is left to stand in the processing vessel, and is thereby separated into a precipitate containing a metal carbonate and a residual liquid (supernatant liquid) containing acetonitrile. The temperature and pressure of the dispersion during standing are not particularly limited, so standing can be performed at room temperature (for example, 25°C ± 15°C) and a normal pressure (for example, about 101 kPa). In one embodiment, a flocculant can be added to the dispersion from the viewpoint of promotion of solid-liquid separation. In this case, after the flocculant is added, the dispersion can be agitated and left to stand. The flocculant is not particularly limited, and it is possible to use an organic flocculant such as a polymeric flocculant, or an inorganic flocculant such as aluminum polychloride or aluminum sulfate.

### <Step of Thermally Decomposing Precipitate>

The precipitate containing the metal carbonate separated in the separation unit 20 is supplied to the heating furnace of the heating unit 30. The precipitate mainly contains the metal carbonate, and also contains water, acetonitrile, and the like. When the precipitate is supplied to the heating furnace and heated to a predetermined temperature, the precipitate is separated into a metal oxide and carbon dioxide. On the other hand, from the viewpoint of the thermal efficiency, the precipitate can thermally be decomposed after it is dehydrated by, for example, a filter, a filter and a dryer, or a spray dryer such that the water content of the precipitate containing the metal carbonate is 20% or less in one embodiment and 10% or less in another embodiment.

The heating temperature of the precipitate in the heating furnace is not particularly limited, and it can be 600°C or more in one embodiment, 750°C or more in another embodiment, and 800°C or more in still another embodiment, and can also be 1,200°C or less in one embodiment, 1,100°C or less in another embodiment, and 950°C or less in still another embodiment.

The heating time of the precipitate in the heating furnace is not particularly limited, and it can be 0.1 hour or more in one embodiment and 0.5 hours or more in another embodiment, and can also be 2 hours or less in one embodiment and 1 hour or less in another embodiment. In addition, the atmosphere in the heating furnace contains a large amount of carbon dioxide.

The metal oxide generated in the heating unit 30 can be captured from the metal oxide extraction port formed in the bottom of the heating furnace. The metal oxide obtained as described above can be used as, for example, a desiccant, a dehydrator, a basic refractory lining, a cement material, a medicine, food, a vulcanization accelerator, a paint/ink pigment, a heat insulating material, a heat-resistant member, an electronic substrate member, and an insulating member.

### <Graphene Generation Step>

Carbon dioxide generated in the heating unit 30 is supplied to the heating furnace of the graphene generating unit 40. This carbon dioxide mainly contains carbon dioxide and also contains a gas generated by decomposition of acetonitrile and the like. Graphene is formed by heating carbon dioxide to a predetermined temperature in the presence of a metal (for example, magnesium or copper) in the heating furnace (see, for example, Japanese Patent Laid-Open No. 2014-527950).

The heating temperature of carbon dioxide in the heating furnace is not particularly limited, and it can be 650°C or more in one embodiment, 750°C or more in another embodiment, and 800°C or more in still another embodiment, and can also be 1,000°C or less in one embodiment, 950°C or less in another embodiment, and 900°C or less in still another embodiment.

The heating time of carbon dioxide in the heating furnace is not particularly limited, and it can be 0.1 hour or more in one embodiment and 0.5 hours or more in another embodiment, and can also be 2 hours or less in one embodiment and 1 hour or less in another embodiment.

The generated graphene can be captured via the valve 72a from the graphene discharge line 72 formed in the heating furnace. The metal used in the generation of graphene is oxidized and forms a metal oxide, so the generated graphene sometimes contains a metal, an oxide, and the like. However, graphene can be separated from, for example, the metal and the oxide by mixing graphene with at least one of water and an aqueous acidic solution and, for example, filtrating the mixture. Graphene obtained in this manner has, for example, conductivity, optical characteristics, spin transport properties, and a magnetic field effect, and can be used as an electronic device constituent element.

### <Residual Liquid Reusing Step>

The residual liquid (supernatant liquid) separated in the separation unit 20 and containing acetonitrile is mixed with an aqueous dispersion containing a metal hydroxide and acetonitrile, which is different from the aqueous dispersion used in the above-mentioned carbon dioxide-containing gas processing step, and the mixture is supplied to the processing vessel of the carbon dioxide processing unit 10, in order to cause the residual liquid to react with a carbon dioxide-containing gas different from the carbon dioxide-containing gas processed in the above-mentioned carbon dioxide-containing gas processing step.

When mixing the residual liquid with another aqueous dispersion containing a metal hydroxide and acetonitrile described above, the content of acetonitrile in another aqueous dispersion containing a metal hydroxide and acetonitrile to be mixed with the residual liquid is decided based on the amount of acetonitrile in the residual liquid, the content of acetonitrile in another aqueous dispersion is adjusted based on the decision, and then the residual liquid and the aqueous dispersion are supplied to the carbon dioxide processing unit 10.

In one embodiment, the residual liquid mainly contains water and acetonitrile, and also contains a metal carbonate and the like. The residual liquid can contain acetonitrile by an amount that is about 40 wt% or less of the amount of acetonitrile in the aqueous dispersion containing a metal hydroxide and acetonitrile and supplied in the abovementioned carbon dioxide-containing gas processing step, although this depends on the conditions of solid-liquid separation in the separation unit 20.

For example, when the residual liquid contains acetonitrile by an amount that is 40 wt% of the amount of acetonitrile in the aqueous dispersion containing a metal hydroxide and acetonitrile and supplied in the abovementioned carbon dioxide-containing gas processing step, the content of acetonitrile in another aqueous dispersion that contains a metal hydroxide and acetonitrile and is mixed with the residual liquid is decided to be an amount obtained by subtracting the amount (40 wt%) of acetonitrile contained in the residual liquid from a necessary amount of acetonitrile. After that, the content of acetonitrile in another aqueous dispersion is so adjusted, and the residual liquid and the aqueous dispersion are supplied to the carbon dioxide processing unit 10.

As described above, the carbon dioxide-containing gas processing method according to one embodiment generates graphene from a by-product and reuses acetonitrile. This can reduce wastes, and can also reduce the cost for the processing of the carbon dioxide-containing gas.

### [Carbon Dioxide-Containing Gas Processing Method According to Another Embodiment]

A carbon dioxide-containing gas processing method according to another embodiment uses the above-described carbon dioxide-containing gas processing system according to another embodiment. Differences from the carbon dioxide-containing gas processing method according to one embodiment will mainly be explained below.

In the carbon dioxide-containing gas processing method according to another embodiment, a metal hydroxide is generated by causing a metal oxide generated by thermal decomposition to react with water, and this metal hydroxide is caused to react with a carbon dioxide-containing gas different from a carbon dioxide-containing gas supplied in the previous carbon dioxide-containing gas processing step. Accordingly, the method includes a step of mixing the metal hydroxide with an aqueous dispersion containing a metal hydroxide and acetonitrile, which is different from an aqueous dispersion that contains a metal hydroxide and acetonitrile and is supplied in the previous carbon dioxide-containing gas processing step.

### <Metal Hydroxide Reusing Step>

Water is supplied to the processing vessel of the metal hydroxide generating unit 50, and a metal oxide generated in the heating unit 30 is supplied to the processing vessel of the metal hydroxide generating unit 50. Consequently, the metal oxide and water are mixed and a dispersion of a metal hydroxide and water is formed in the processing vessel.

For example, in a case in which the metal oxide generated in the heating unit 30 is calcium oxide and a dispersion of calcium hydroxide and water is formed by mixing calcium oxide and water, the reaction between calcium oxide and water generates heat of solution, so the reaction can be performed at room temperature (for example, 25°C ± 15°C) without heating the interior of the processing vessel. As another example, in a case in which the metal oxide generated in the heating unit 30 is magnesium oxide and a dispersion of magnesium hydroxide and water is formed by mixing magnesium oxide and water, the reaction between magnesium oxide and water generates heat, but the reaction rate is low, so the interior of the processing vessel can be heated to 80°C to 90°C.

To cause the dispersion of the metal hydroxide and water generated in the metal hydroxide generating unit 50 to react with a carbon dioxide-containing gas different from the carbon dioxide-containing gas processed in the previous carbon dioxide-containing gas processing step, this dispersion is mixed with an aqueous dispersion containing a metal hydroxide and acetonitrile, which is different from the aqueous dispersion used in the previous carbon dioxide-containing gas processing step, and the mixture is supplied to the processing vessel of the carbon dioxide processing unit 10.

When mixing the dispersion of the metal hydroxide and water with the other aqueous dispersion containing the metal hydroxide and acetonitrile described above, the content of the metal hydroxide in another aqueous dispersion containing the metal hydroxide and water, which is mixed with the dispersion of the metal hydroxide and water, is decided based on the amount of the metal hydroxide in the dispersion of the metal hydroxide and water. Therefore, the content of the metal hydroxide in another aqueous dispersion is adjusted, and the aqueous dispersion and the dispersion of the metal hydroxide and water are supplied to the carbon dioxide processing unit 10.

In one embodiment, the dispersion of the metal hydroxide and water mainly contains water and the metal hydroxide, and also contains acetonitrile and the like. The content of the metal hydroxide in this dispersion of the metal hydroxide and water can be adjusted by the amounts of the metal hydroxide and water to be supplied to the processing vessel of the metal hydroxide generating unit 50. The concentration of the metal hydroxide can be 1 wt% or more in one embodiment, 5 wt% or more in another embodiment, 10 wt% or more in still another embodiment, 20 wt% or more in still another embodiment, and 30 wt% or more in still another embodiment, as the solid component content.

For example, the content of the metal hydroxide in another aqueous dispersion that contains the metal hydroxide and water and is mixed with the dispersion of the metal hydroxide and water is decided to be an amount obtained by subtracting the amount of the metal hydroxide contained in the dispersion of the metal hydroxide and water from the amount of the metal hydroxide necessary for the carbon dioxide-containing gas processing. Then, the content of the metal hydroxide in another aqueous dispersion is adjusted, and the dispersion of the metal hydroxide and water and the aqueous dispersion are supplied to the carbon dioxide processing unit 10.

### <Step of Reusing Residual Liquid and Metal Hydroxide>

In one embodiment, when mixing a dispersion of a residual liquid, a metal hydroxide, and water with the other aqueous dispersion containing a metal hydroxide and acetonitrile described above, the contents of acetonitrile and the metal hydroxide in another aqueous dispersion that contains the metal hydroxide and acetonitrile and is mixed with the dispersion containing the residual liquid, the metal hydroxide, and water are decided based on the amount of acetonitrile in the residual liquid and the amount of the metal hydroxide in the dispersion of the metal hydroxide and water. The contents of acetonitrile and the metal hydroxide in another aqueous dispersion are adjusted based on this decision, and the dispersion of the residual liquid, the metal hydroxide, and water and the aqueous dispersion are supplied to the carbon dioxide processing unit 10.

For example, the contents of acetonitrile and the metal hydroxide in another aqueous dispersion that contains the metal hydroxide and acetonitrile and is mixed with the dispersion of the residual liquid, the metal hydroxide, and water are decided to be amounts obtained by subtracting the amount of acetonitrile contained in the residual liquid and the amount of the metal hydroxide in the dispersion of the metal hydroxide and water from the amounts of acetonitrile and the metal hydroxide necessary for the processing of the carbon dioxide-containing gas. The contents of acetonitrile and the metal hydroxide in another aqueous dispersion are adjusted based on this decision, and the dispersion of the metal hydroxide and water and the aqueous dispersion are supplied to the carbon dioxide processing unit 10.

As described above, the carbon dioxide-containing gas processing method according to another embodiment generates a metal hydroxide from by-products. This can reduce wastes, and can also reduce the cost for the processing of the carbon dioxide-containing gas.

### [Carbon Dioxide-Containing Gas Processing Method According to Still Another Embodiment]

A carbon dioxide-containing gas processing method according to still another embodiment uses the carbon dioxide-containing gas processing system according to still another embodiment described above. Differences from the carbon dioxide-containing gas processing method according to one embodiment will mainly be explained below.

The carbon dioxide-containing gas processing method according to still another embodiment includes a carbon dioxide-containing gas processing step of generating a metal carbonate by causing carbon dioxide remaining in a processed carbon dioxide-containing gas and an aqueous dispersion containing a metal hydroxide and acetonitrile to react with each other.

### <Carbon Dioxide-Containing Gas Processing Step of Further Generating Metal Carbonate>

A gas processed in the carbon dioxide processing unit 10 is supplied to the processing vessel of the carbon dioxide processing unit 10a via the processed gas supply line 71, and an aqueous dispersion containing a metal hydroxide and acetonitrile is supplied to the processing vessel of the carbon dioxide processing unit 10a via the aqueous dispersion supply unit.

The supply amount of the aqueous dispersion can be adjusted to be an amount with which carbon dioxide in the processed gas can be processed, by measuring the concentration of carbon dioxide in the processed gas by using a gas detecting unit or the like. Also, the contents of the metal hydroxide and acetonitrile in the aqueous dispersion can be adjusted before the aqueous dispersion is supplied to the aqueous dispersion supply line 12.

As the metal hydroxide, acetonitrile, and water contained in the aqueous dispersion containing the metal hydroxide and acetonitrile, it is possible to use a metal hydroxide, acetonitrile, and water similar to those explained in [Carbon Dioxide-Containing Gas Processing Method According to One Embodiment].

As in the carbon dioxide processing unit 10, the processed gas supplied to the processing vessel of the carbon dioxide processing unit 10a is ejected into the aqueous dispersion from the ejection port, diffused as foam, and brought into contact with the aqueous dispersion. The ejected carbon dioxide-containing gas (or foam) agitates the aqueous dispersion.

The foam of the processed gas brought into contact with the aqueous dispersion reacts with the metal hydroxide in the aqueous dispersion, thereby generating a metal carbonate. The temperature of the aqueous dispersion in this reaction is not particularly limited, and the reaction can be performed at room temperature (for example, 25°C ± 15°C). This can improve the absorption rate and the absorption amount of carbon dioxide. Also, the internal pressure of the processing vessel can be measured by a pressure gauge. The internal pressure of the processing vessel is not particularly limited, and can be set at, for example, a pressure equal to or higher than the atmospheric pressure. This can improve the absorption rate and the absorption amount of the carbon dioxide-containing gas with respect to the aqueous dispersion. Alternatively, the internal pressure of the processing vessel can be set at a pressure lower than the atmospheric pressure.

The end of the reaction between the carbon dioxide-containing gas and the aqueous dispersion can be a point of time at which a time predetermined by a preliminary experiment or the like elapsed, and can also be a point of time at which a predetermined carbon dioxide concentration is obtained by collecting the processed gas in the processing vessel by a gas collecting unit after the elapse of a predetermined time or every predetermined time, and measuring the concentration of carbon dioxide by the gas collecting unit.

After the reaction between the carbon dioxide-containing gas and the aqueous dispersion ended, the processed gas existing in the processing vessel can be captured from the processing vessel via the processed gas discharge line 73 installed in the upper portion of the processing vessel. When the carbon dioxide-containing gas is a gas emitted from a natural gas purification equipment (that is, a gas deriving from a natural gas), the captured gas is used as a product gas as a material of a liquefied natural gas or the like. When the carbon dioxide-containing gas is a gas emitted from various facilities and equipment, the captured gas undergoes removal of other components or another processing, and is emitted after that.

The carbon dioxide-containing gas processing method according to still another embodiment can include a step of performing solid-liquid separation on the dispersion obtained after the processed gas is processed. This dispersion obtained after the processed gas is processed is supplied together with the dispersion obtained after the carbon dioxide-containing gas is processed to the processing vessel of the separation unit 20a. The dispersion is left to stand in the processing vessel, and is thereby separated into a precipitate containing a metal carbonate and a residual liquid (supernatant liquid) containing acetonitrile. As the conditions and the like in this solid-liquid separation, it is possible to use conditions similar to those explained in [Carbon Dioxide-Containing Gas Processing Method According to One Embodiment].

Also, as explained in [Carbon Dioxide-Containing Gas Processing Method According to One Embodiment], the precipitate containing the metal carbonate separated in the separation unit 20a is separated into a metal oxide and carbon dioxide by being supplied to the heating furnace of the heating unit 30 and heated to a predetermined temperature.

The residual liquid (supernatant liquid) separated in the separation unit 20a and containing acetonitrile is mixed with an aqueous dispersion containing a metal hydroxide and acetonitrile, which is different from the aqueous dispersion used in the above-mentioned carbon dioxide-containing gas processing step, and the mixture is supplied to the processing vessels of the carbon dioxide processing unit 10 and the carbon dioxide processing unit 10a, in order to cause the residual liquid to react with a carbon dioxide-containing gas and a processed gas different from the carbon dioxide-containing gas processed in the above-mentioned carbon dioxide-containing gas processing step and the processed gas.

The carbon dioxide-containing gas processing method according to still another embodiment can include a step of reusing the residual liquid and the metal hydroxide. When mixing the residual liquid and the dispersion of the metal hydroxide and water with an aqueous dispersion different from the aqueous dispersion containing the metal hydroxide and acetonitrile and used in the carbon dioxide-containing gas processing step described above, the contents of acetonitrile and the metal hydroxide in another aqueous dispersion containing the metal hydroxide and acetonitrile, which is mixed with the residual liquid and the dispersion of the metal hydroxide and water, are decided based on the amount of acetonitrile in the residual liquid and the amount of the metal hydroxide in the dispersion of the metal hydroxide and water, for each of the carbon dioxide processing unit 10 and the carbon dioxide processing unit 10a. The contents of acetonitrile and the metal hydroxide in another aqueous dispersion are adjusted based on these decisions, and the residual liquid, the dispersion of the metal hydroxide and water, and the aqueous dispersion are supplied to the carbon dioxide processing unit 10 and the carbon dioxide processing unit 10a. As the method of supplying the residual liquid and the dispersion of the metal hydroxide and water, it is possible to use a method similar to that explained in [Carbon Dioxide-Containing Gas Processing Method According to Another Embodiment].

As described above, still another carbon dioxide-containing gas processing method includes the carbon dioxide processing unit 10a in addition to the carbon dioxide processing unit 10. This improves the removal ratio of carbon dioxide in the carbon dioxide-containing gas.

### <Summary of Embodiments>

The disclosure of this specification includes the following carbon dioxide-containing gas processing systems and carbon dioxide-containing gas processing methods.

### (Item 1)

A carbon dioxide-containing gas processing system comprises:
a carbon dioxide processing unit configured to generate a metal carbonate by causing a carbon dioxide-containing gas and an aqueous dispersion containing a metal hydroxide and acetonitrile to react with each other;
a separation unit configured to perform solid-liquid separation on a dispersion obtained after the carbon dioxide-containing gas is processed, thereby generating a precipitate containing the metal carbonate and a residual liquid containing acetonitrile;
a residual liquid supply unit configured to supply the residual liquid to the carbon dioxide processing unit;
a heating unit configured to generate carbon dioxide and a metal oxide by thermally decomposing the precipitate; and
a graphene generating unit configured to generate graphene by heating the generated carbon dioxide,
wherein a content of acetonitrile in an aqueous dispersion that contains a metal hydroxide and acetonitrile and is supplied together with the residual liquid to the carbon dioxide processing unit is decided based on an amount of acetonitrile in the residual liquid.

### (Item 2)

The system according to Item 1 further comprises a metal hydroxide generating unit configured to generate a metal hydroxide by causing the metal oxide generated by the heating unit to react with water,
wherein the metal hydroxide generating unit includes a metal hydroxide supply unit configured to supply the metal hydroxide to the carbon dioxide processing unit.

### (Item 3)

The system according to Item 1 or 2 further comprises a carbon dioxide processing unit configured to accept a processed gas from the carbon dioxide processing unit, and generate a metal carbonate by causing carbon dioxide remaining in the processed gas and an aqueous dispersion containing a metal hydroxide and acetonitrile to react with each other.

### (Item 4)

In the system according to any one of Items 1 to 3, the carbon dioxide-containing gas derives from a natural gas.

### (Item 5)

A carbon dioxide-containing gas processing method comprises:
generating a metal carbonate by causing a carbon dioxide-containing gas and an aqueous dispersion containing a metal hydroxide and acetonitrile to react with each other;
performing solid-liquid separation on a dispersion obtained after the carbon dioxide-containing gas is processed, thereby generating a precipitate containing the metal carbonate and a residual liquid containing acetonitrile;
generating carbon dioxide and a metal oxide by thermally decomposing the precipitate; and
generating graphene by heating the generated carbon dioxide,
wherein when mixing the residual liquid with an aqueous dispersion that contains a metal hydroxide and acetonitrile and is different from the abovementioned aqueous dispersion in order to cause the residual liquid to react with a carbon dioxide-containing gas different from the carbon dioxide-containing gas, a content of acetonitrile in the different aqueous dispersion that contains a metal hydroxide and acetonitrile and is mixed with the residual liquid is decided based on an amount of acetonitrile in the residual liquid.

### (Item 6)

The method according to Item 5 further comprises generating a metal hydroxide by causing the metal oxide generated by thermal decomposition to react with water,
wherein the metal hydroxide is mixed with another aqueous dispersion containing a metal hydroxide and acetonitrile in order to cause the metal hydroxide to react with the other carbon dioxide-containing gas.

### (Item 7)

The method according to Item 5 or 6 further comprises generating a metal carbonate by causing carbon dioxide remaining in a processed carbon dioxide-containing gas and an aqueous dispersion containing a metal hydroxide and acetonitrile to reach with each other.

### (Item 8)

In the method according to any one of Items 5 to 7, the carbon dioxide-containing gas derives from a natural gas.

The invention is not limited to the foregoing embodiments, and various variations/changes are possible within the spirit of the invention.

## Claims

1. A carbon dioxide-containing gas processing system (100) comprising:
a carbon dioxide processing unit (10) configured to generate a metal carbonate by causing a carbon dioxide-containing gas and an aqueous dispersion containing a metal hydroxide and acetonitrile to react with each other;
a separation unit (20) configured to perform solid-liquid separation on a dispersion obtained after the carbon dioxide-containing gas is processed, thereby generating a precipitate containing the metal carbonate and a residual liquid containing acetonitrile;
a residual liquid supply unit configured to supply the residual liquid to the carbon dioxide processing unit (10);
a heating unit (30) configured to generate carbon dioxide and a metal oxide by thermally decomposing the precipitate; and
a graphene generating unit (40) configured to generate graphene by heating the generated carbon dioxide,
wherein a content of acetonitrile in an aqueous dispersion that contains a metal hydroxide and acetonitrile and is supplied together with the residual liquid to the carbon dioxide processing unit (10) is decided based on an amount of acetonitrile in the residual liquid.

2. The system (100) according to claim 1, further comprising a metal hydroxide generating unit (50) configured to generate a metal hydroxide by causing the metal oxide generated by the heating unit (30) to react with water,
wherein the metal hydroxide generating unit (50) includes a metal hydroxide supply unit configured to supply the metal hydroxide to the carbon dioxide processing unit (10).

3. The system (100) according to claim 1 or 2, further comprising a carbon dioxide processing unit (10a) configured to accept a processed gas from the carbon dioxide processing unit (10), and generate a metal carbonate by causing carbon dioxide remaining in the processed gas and an aqueous dispersion containing a metal hydroxide and acetonitrile to react with each other.

4. The system (100) according to any one of claims 1 to 3, wherein the carbon dioxide-containing gas derives from a natural gas.

5. A carbon dioxide-containing gas processing method comprising:
generating a metal carbonate by causing a carbon dioxide-containing gas and an aqueous dispersion containing a metal hydroxide and acetonitrile to react with each other;
performing solid-liquid separation on a dispersion obtained after the carbon dioxide-containing gas is processed, thereby generating a precipitate containing the metal carbonate and a residual liquid containing acetonitrile;
generating carbon dioxide and a metal oxide by thermally decomposing the precipitate; and
generating graphene by heating the generated carbon dioxide,
wherein when mixing the residual liquid with an aqueous dispersion that contains a metal hydroxide and acetonitrile and is different from the abovementioned aqueous dispersion in order to cause the residual liquid to react with a carbon dioxide-containing gas different from the carbon dioxide-containing gas, a content of acetonitrile in the different aqueous dispersion that contains a metal hydroxide and acetonitrile and is mixed with the residual liquid is decided based on an amount of acetonitrile in the residual liquid.

6. The method according to claim 5, further comprising generating a metal hydroxide by causing the metal oxide generated by thermal decomposition to react with water,
wherein the metal hydroxide is mixed with another aqueous dispersion containing a metal hydroxide and acetonitrile in order to cause the metal hydroxide to react with the other carbon dioxide-containing gas.

7. The method according to claim 5 or 6, further comprising generating a metal carbonate by causing carbon dioxide remaining in a processed carbon dioxide-containing gas and an aqueous dispersion containing a metal hydroxide and acetonitrile to reach with each other.

8. The method according to any one of claims 5 to 7, wherein the carbon dioxide-containing gas derives from a natural gas.
